# EUROPEAN PATENT APPLICATION

(11) **EP 4 571 298 A1**
(43) Date of publication of application: **18.06.2025**
(21) Application number: 24214168.7
(22) Date of filing: 20.11.2024
(51) Int. Cl.: G01N 21/88, G01N 21/95

(54) **IMAGING**

(30) Priority: 11.12.2023 GB 202318858
(71) Applicant: Rolls-Royce plc, London N1 9FX (GB)
(72) Inventor: Moore, Benjamin J, Derby, DE24 8BJ (GB)
(74) Representative: Rolls-Royce plc

(57) **Abstract**

An imaging system for a component to be imaged, the imaging system comprising a frame having an upper and lower section, at least one section comprising a clamp for holding the component, the frame supporting an camera container, wherein the camera container comprises a box having at least one white light source and a diffuser and at least one camera, and wherein the camera is connected to a computer.

## Description

### Overview of the Disclosure

The disclosure relates to an imaging apparatus for determining the condition of a blade root and assessing the quality of a coating. The disclosure further relates to a method of imaging a blade to assess the quality and the presence of a coating.

### Background of the disclosure

During overhaul and maintenance of a gas turbine engine it is important to assess the condition and quality of the blades. If a blade fails, it can be catastrophic for the engine; this is because there is a potential of damage to the engine as the blade is ingested. Even without catastrophic failure Ingestion of the blade can cause further damage to subsequent blades further down the engine. This potential failure is why it is important to image blades during overhaul and maintenance, so that any potential faults of issues can be identified prior to failure.

One of the issues with inspecting blades is their complex shape having a dovetail or firtree root, then there is a subsequent highly curved blade. In the case of fan blades these can be large in size over 1 m in length. An operator can be trained to visually inspect the blade by eye, but differences between operators and concentration spans means that inspections are not always repeatable or reliable. These are among the factors that makes the repeatable inspection of a blade difficult. The result of this is that the monitoring of damage or wear on the blade is difficult. It is therefore desirable to develop a means for repeatably imaging the blade, along with a method. Such a system would allow an engine manufacturer to see faults and to identify fault mechanisms within the blades.

### Summary of the Disclosure

The scope of the disclosure is set out in the appended claims.

According to a first aspect there is provided an imaging system for a component to be imaged, the imaging system comprising a frame having an upper and lower section, at least one section comprising a clamp for holding the component, the frame supporting an camera container, wherein the camera container comprises a box having at least one white light source and a diffuser and at least one camera, and wherein the camera is connected to a computer.

The camera container may contain two cameras that are angularly offset from one another.

The cameras may be mounted on moveable stages that can move in at least one axis.

The clamp may be a slot that is shaped to accommodate the component to be imaged.

The frame may be provided with another measurement tool for assessing the condition of the component, the tool being at least one of ultrasonic probe, eddy current probe.

Two white light sources, with the light sources may be positioned spatially and axially spaced apart.

The component to be imaged may be a blade for a gas turbine engine.

According to a second aspect of the disclosure there is provided a method of imaging a component using the tool as discussed in the first aspect, wherein the method comprises; inserting the component to be scanned into the tool,
imaging the component,
transferring the image data to the computer,
adding metadata to the image data,
analysing the image data,
deciding an action for the component.

The metadata may include at least one of: engine, engine number, operator, component number, blade number, engine flying hours.

More than one image may be taken for the component.

The analysis may be performed by machine learning or artificial intelligence.

The deciding an action for the component, may involve identifying the presence of damage of damage on the component and assessing the severity of the damage to component.

After the first imaging step the camera may be moved to at least one more position and at least one more image is obtained.

The decision data from the component is one of: reinstall, replace, repair, or monitor.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### Brief Description of the Drawings

Embodiments will now be described by way of example only with reference to the accompanying drawings, which are purely schematic and not to scale, and in which:
Figure 1 presents a cross section of a gas turbine engine;
Figure 2 presents an example of the tool according to the present disclosure;
Figure 3 presents a flow chart of an operation assessing for the condition of a blade;
Figure 4 presents a flow chart of an AI assessment of the condition of a blade.

### Detailed Disclosure

Aspects and embodiments of the present disclosure will now be discussed with reference to the accompanying figures. Further aspects and embodiments will be apparent to those skilled in the art.

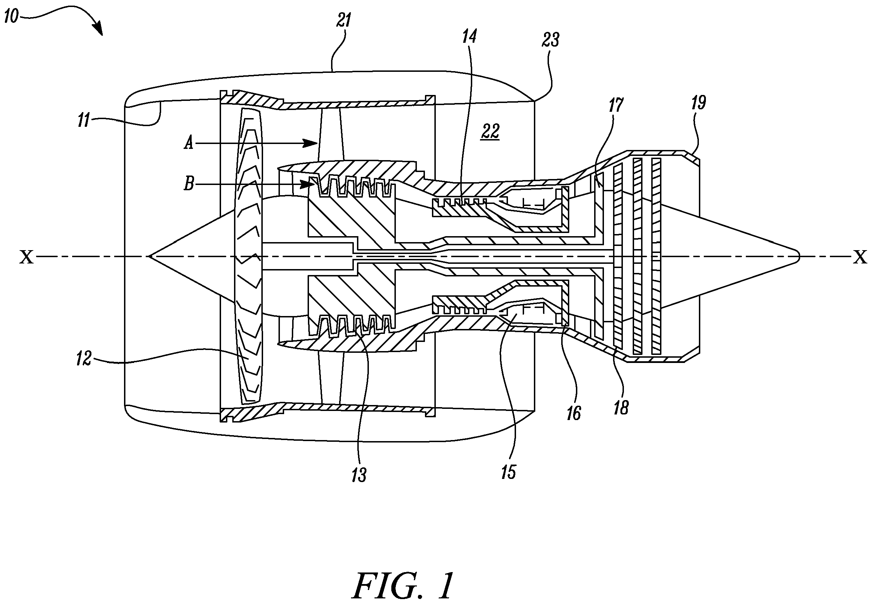

With reference to Figure 1, a ducted fan gas turbine engine incorporating the invention is generally indicated at 10 and has a principal and rotational axis X-X. The engine comprises, in axial flow series, an air intake 11, a variable pitch propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first air flow A into the intermediate-pressure compressor 13 and a second air flow B which passes through the bypass duct 22 to provide propulsive thrust. The intermediate-pressure compressor 13 compresses the air flow A directed into it before delivering that air to the high-pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate-pressure compressors 14, 13 and the fan 12 by suitable interconnecting shafts.

Blades can in a gas turbine engine can become damaged through a number of different ways. The blades themselves are subject to large force loads for repeated cycles as they are accelerated to max speed for take-off and then stopped after every use. The repeated high force loading can cause damage to form in the blade roots. In addition to this the blades can be struck by objects that can cause damage at specific points or throughout the blades. Also, the repeated insertion and removal of the blades or damage or movement of the blade its slot can cause damage to coatings through friction. Any damage to the blade can reduce its lifespan and can reduce the performance of the engine to which it is attached.

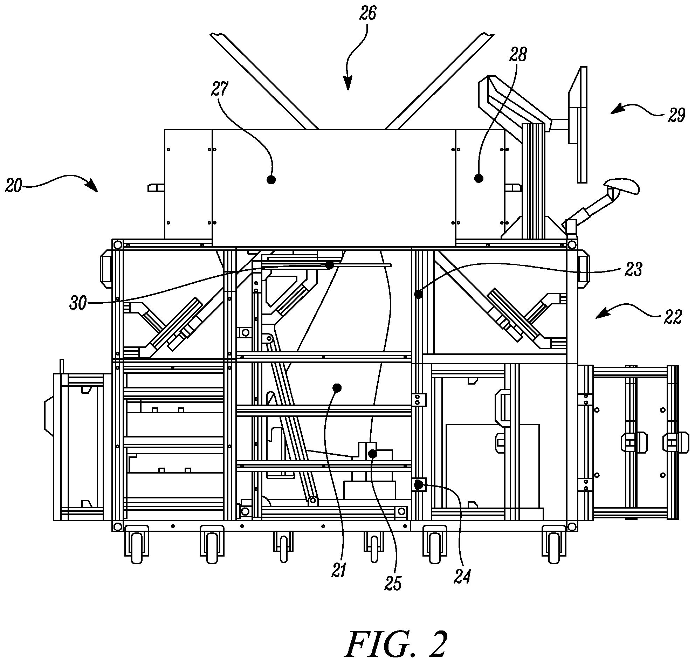

Figure 2 presents an example of a tool 20 for capturing an image of a blade root. In the image presented in figure 2 the blade 21 is a fan blade, but an equivalently scaled tool could be used for other types of blades. The tool comprises a frame 22 having an upper portion 23 and lower portion 24. The lower portion having a blade mount 25. The blade mount in this case is a slot for sliding the blade into and for maintaining the position on the blade. Clamps or other fixturing tools may be positioned at the lower part of the rig or at any other suitable point on the tool. In this case the blade is configured to have the root inspected. However, other aspects of the blade could be imaged with the tool in different configurations. For the imaging of the blade root it is has been found that the better imaging can be achieved with the blade positioned so that the root is at the top dead centre. The upper portion of the tool has the camera container 26. The camera container has the imaging camera(s) 27 and lighting system 28. The camera container has at least one white light source and at least one diffuser for the at least one white light source. The diffuser is used to glare or bright spots on the component, which could potentially hide areas of damage. The white light source is also important if imaging coatings; this is because some of the coatings can be masked by the use of yellow light. The tool is also equipped with at least one camera. Any suitable camera may be used. For example, the camera may be a machine vision camera. Preferably, the tool is equipped with at least two cameras to capture the blade at different angles. The use of two camera allows different areas and angular perspectives to be imaged; thus, allowing more data to be collected, and avoiding areas that cannot be imaged. The camera may be positioned between 100 mm and 1000mm from the aspect of the component being imaged. The camera can be positioned at any suitable angle relative for the component. For example, this may be perpendicular to a major axis of the component. In the case of a blade root it has been found that the camera is best positioned between 150-800 mm from the blade root and with the camera positioned perpendicular to the blade root angle, which is 45 degrees for the z plane of the blade. The cameras may be mounted on stages allowing them to move in one, two or three dimensions. The movement of the cameras allows for different aspects of the blade to be imaged. For example, the imaging may be to inspect the dry film lubricant coating, which covers the region of the blade that is in contact with the drum. If motorised stages are used to move the camera then the location and angle of the camera can be recorded. This allows the operator to know which aspect they are imaging and means that repeatable imaging can be achieved for the component. A component reader may also be used to scan and log the component being imaged. The output from the at least one component is fed into a computer 29. The computer can be any suitable computer. The computer can be a PC, laptop, tablet or phone type computer. The computer requires memory, a processor, a display unit, a user input and graphic processing unit. The data may be transferred to the computer using a wired or wireless communication protocol.

When the image data is uploaded to the computer the image file may be modified to include extra metadata. The metadata may include one or more of the following: engine, engine number, operator, blade number, flight flying hours. The image can inspected on the computer by a trained operator, who can recognise and log any faults, issues or problem areas. The operator can also make a decision as to if the component is fit for continued use, i.e., sentencing the component. Alternatively, machine learning or artificial intelligence systems may be used to process the images of the blade. In addition to identifying faults or issues, the processing of the blade may also be used to sentence the blade. In the case of the machine learning or artificial Intelligence systems, a database can be built up using images of blades that have been assessed by a human operator to train the system. These images are taken using the same system and analysed by a skilled operator and are fed into the system and used to train the discriminator to enable it to identify issues with the blades. The system may also be trained to rank the potential severity of the issue or fault. For example, an issue may be a crack, missing coating layers, signs of degradation among other issues and depending upon severity they may be given a score (e.g., 1-10). The system may be trained using between 50 and more than 100,000 images of blades having differing levels of faults which have been analysed by the operator. The use of these images to train the system means that the analysis can take place quicker and can be done consistently. The use of machine learning or AI systems can also act to speed up the process of assessing the quality of the blades.

Other blade assessment techniques may be incorporated onto the tool. These assessment tools 30 may include moveable probes that can touch the blade and eddy current probe or ultrasonic test the blade. There may be more than one of these moveable probes placed on the tool. The output of these tools may be recorded by the computer and along with the image data, so that they can be processed together. The upper tool lights and camera may be able to pivot, so that they can clear the blade and allow the blade to be x-ray analysed.

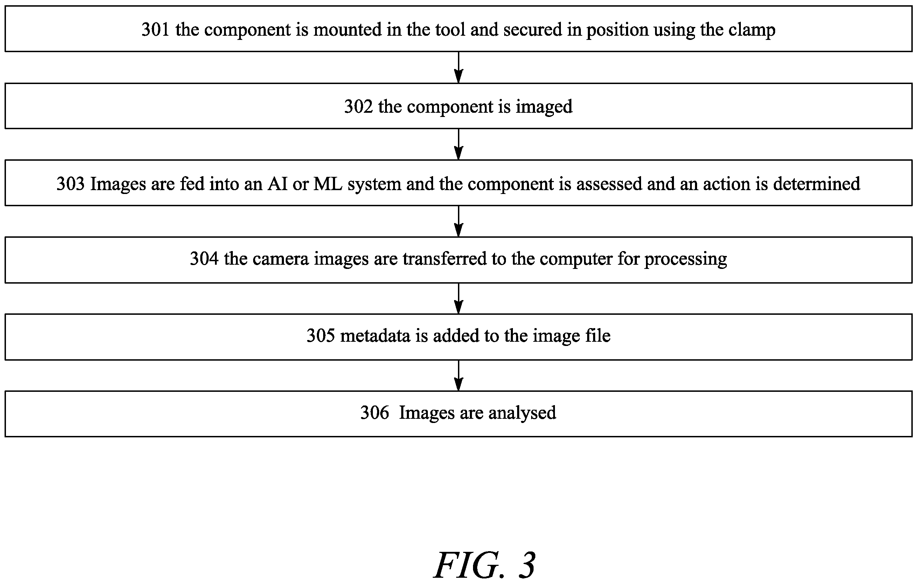

Figure 3 presents a flow chart of the process of assessing the quality of a blade. The blade can be removed during any overhaul, maintenance process. The blade can be from any stage of the engine. In step 301 the blade is mounted in the tool clamp and secured in position using the cut-out or the clamp provided on the tool. The blade is mounted in its desired configuration; in the case of figure 2 the blade is mounted with its root positioned in the top dead centre position. The lights are switched on and the cameras are positioned about the aspect of the blade to be imaged. In step 302 the blade is imaged. This involves turning on the light and taking the required images using the cameras. In step 303 the camera images are transferred to the computer for processing. In step 304 the metadata for the blade is added to the image file. The metadata may include one or more of the following: engine, engine number, operator, blade number, engine flying hours. In step 305 the images are analysed. The images may be analysed by a human operator or using a computer system (either a machine learning or AI system. The analysis is looking for evidence of faults or issues with the blades. These faults or issues may be cracks, visible damage, wear to coatings, corrosion or any other fault or issue. If other inspection probes are present on the tool, such as ultrasonic or contact eddy current probe, the data from these results can also be analysed during this step. In step 306 a decision can be made regarding the suitability and future processes to be done to the blade. The future processes may be reinstalled on the engine, or send for repair before reinstall, or scrapping of the blade.

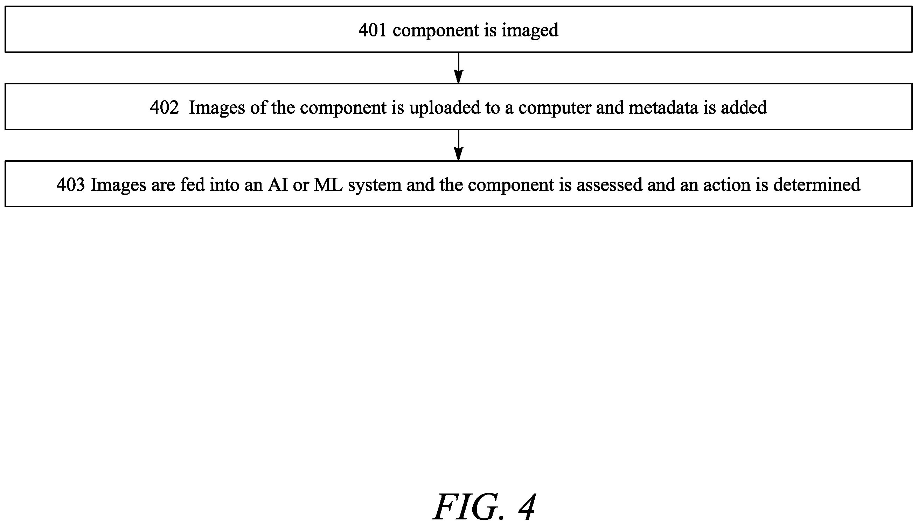

Figure 4 presents a schematic of an artificial learning system for use with analysing the blades. In step 401 the photo of the aspect of the blade is taken. In the example of figure 2 this will be obtaining two images of the blade root from 2 different angles. In step 402 these are images are uploaded onto a computer and metadata for the blade added. The metadata may include one or more of the following: engine, engine number, operator, blade number, engine flying hours. In step 403 the images are fed into an AI system, and a trained discriminator is used to identify faults or issues with the blade. If no faults or issues are present the blade can be passed and the blade can be deemed suitable to be reinstalled onto the engine. If a fault or issues is present the AI system can determine the fault and alert an operator to make a decision about what next steps should be taken with the blade.

In all of these cases, whether operator inspected or inspected by an AI or machine leaning system, the presence of a fault or an issue can be logged onto a computer database. The presence of the fault or issue may be logged with metadata. The metadata may include one or more of the following: engine, engine number, operator, blade number, engine flying hours, year manufactured, month manufactured, location of manufacturing. The database may be used to identify likely faults and determine schedules for maintenance. Maintenance schedules may be determined by the operator if it is noted that there is a greater number of failures or issues early for operators based out of different geographic locations. If the tool is provided with other testing means, such as ultrasonic probes the results from this analysis may be added to the database to provide a thorough performance and condition analysis of the blade.

Although the concept has been presented for a blade for a gas turbine engine. The concept can be applied to other system wherein components are removed for inspection and repair. For example, this may be components within an internal combustion engine or parts for pumps and other motors in which wear and damage occur during use.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. An imaging system for a component to be imaged, the imaging system comprising a frame having an upper and lower section, at least one section comprising a clamp for holding the component, the frame supporting an camera container, wherein the camera container comprises a box having at least one white light source and a diffuser and at least one camera, and wherein the camera is connected to a computer.

2. The imaging system according to claim 1, wherein the camera container contains two cameras that are angularly offset from one another.

3. The imaging system according to claim 1 or claim 2, wherein the cameras are mounted on moveable stages that can move in at least one axis.

4. The imaging system according to any preceding claim, wherein the clamp is a slot that is shaped to accommodate the component to be imaged.

5. The imaging system according to any preceding claim, wherein the frame is provided with another measurement tool for assessing the condition of the component, the tool being at least one of ultrasonic probe, eddy current probe.

6. The imaging system according to any preceding claim, wherein two white light sources, with the light sources are positioned spatially and axially spaced apart.

7. The imaging system according to any preceding claim, wherein the component to be imaged is a blade for a gas turbine engine.

8. A method of imaging a component using the tool as claimed in any one of claims 1-7, wherein the method comprises;
inserting the component to be scanned into the tool,
imaging the component,
transferring the image data to the computer,
adding metadata to the image data,
analysing the image data,
deciding an action for the component.

9. The method of claim 8, wherein the metadata includes at least one of: engine, engine number, operator, component number, blade number, engine flying hours.

10. The method according to claim 8 or claim 9, wherein more than one image is taken for the component.

11. The method according to any one of claim 8-10, wherein the analysis is done by machine learning or artificial intelligence.

12. The method according to any oneof claims 8-11, wherein the deciding an action for the component, involves identifying the presence of damage of damage on the component and assessing the severity of the damage to component.

13. The method according to any one of claims 8-12, wherein the after the first imaging step the camera is moved to at least one more position and at least one more image is obtained.

14. The method according to any one of claims 8-13, wherein the decision data from the component is one of: reinstall, replace, repair, or monitor.
